# EUROPÄISCHE PATENTANMELDUNG

(11) **EP 3 985 069 A1**
(43) Veröffentlichungstag der Anmeldung: **20.04.2022**
(21) Anmeldenummer: 21190044.4
(22) Anmeldetag: 06.08.2021
(51) Int. Cl.: C08L 83/12, C11D 3/00

(54) **ENTSCHÄUMERZUSAMMENSETZUNG AUF BASIS VON ORGANOFUNKTIONELL MODIFIZIERTEN POLYSILOXANEN**

(30) Priorität: 14.08.2020 EP 20191077
(71) Anmelder: Evonik Operations GmbH, 45128 Essen (DE)
(72) Erfinder: Schierle, Thorsten, 45289 Essen (DE); Favresse, Philippe, 40880 Ratingen (DE); Ferenz, Michael, 45147 Essen (DE); Schubert, Frank, 47506 Neukirchen-Vluyn (DE); Schulz, Alexander, 45128 Essen (DE); Gippert, Michael, 45138 Essen (DE); Wessiepe, Tim Luca, 45307 Essen (DE)
(74) Vertreter: Evonik Patent Association

(57) **Zusammenfassung**

Die Erfindung betrifft eine Entschäumerzusammensetzung auf Basis von organofunktionell modifizierten Polysiloxanen enthaltend
- ein oder mehrere seitenständig mit Polyether modifiziertem Polysiloxan als Komponente A und
- mindestens ein endständig mit Polyether modifiziertem Polysiloxan als Komponente B.

## Beschreibung

Die vorliegende Erfindung betrifft eine Entschäumerzusammensetzung auf Basis von organofunktionell modifizierten Polysiloxanen.

Schaum ist ein häufig auftretendes unerwünschtes Phänomen bei der Herstellung und Verarbeitung von Farben, Lacken und Druckfarben. So kann die Bildung von Schaum dazu führen, dass die Produktionsbehälter nicht optimal befüllt werden können. Er stört somit die Produktionsabläufe und führt zu unnötigen Wartezeiten. Beim Druckvorgang beispielsweise führt Schaum zum Überlaufen der Farbwannen und beeinträchtigt die Farbübertragung von der Walze auf das Substrat. Getrockneter Schaum hinterlässt Oberflächendefekte im Lackfilm. Die Ursache für Schaum ist der Eintrag von Gas in das flüssige Material. Dies geschieht zum Beispiel durch:
- mechanischen Eintrag der Luft bei der Herstellung durch Rühren und Mischen,
- Verdrängung von Luft bei der Benetzung von Pigmenten und Füllstoffen mechanischen, Eintrag von Luft bei der Applikation, z. B. durch Rollen, Spritzen, Drucken,
- Verdrängung von Luft bei der Beschichtung poröser Untergründe.

Praktisch alle Komponenten in der Lackrezeptur können das Schaumverhalten in positiver oder negativer Weise beeinflussen. Um Schaum zu vermeiden und entstandenen Schaum zu zerstören, müssen den Formulierungen daher Entschäumer zugesetzt werden.

Typische Wirkstoffe für die Formulierung von Entschäumern sind Polysiloxane, Mineral- und Pflanzenöle oder Polymere. Es ist bekannt, durch Kombination der Wirkstoffe untereinander, aber auch durch Zusatz feinteiliger hydrophober Festkörper, wie beispielsweise Kieselsäuren, lassen sich auf spezifische Anwendungen zugeschnittene, besonders wirksame Entschäumer formulieren.

Silikone werden in der Lackindustrie seit Anfang der fünfziger Jahre eingesetzt. Insbesondere durch die chemische Modifizierung der Dimethylpolysiloxan-Kette konnten die wichtigsten Silikon-Eigenschaften, wie etwa Verträglichkeit, Gleitwiderstand oder Kratzfestigkeit gesteuert werden.

Bekannte modifizierte Dimethylpolysiloxan-Ketten sind Polyoxyalkylen-Polysiloxane, wobei das ausgewogene Verhältnis deren Polyoxyalkylenblöcke und deren Polysiloxanblöcke und auch der Aufbau der beiden Blöcke von großer Bedeutung sind. Für den Aufbau eines möglichst wirksamen Entschäumers für den Einsatz in Holz-, Kunststoff-, Industrie-, Automobillacke oder Druckfarben gibt es eine Vielzahl von Variablen sowohl für den Polyoxyalkylenblock als auch für den Polysiloxanblock:
Der Polyoxyalkylenblock kann aus verschiedenen Oxyalkyleneinheiten, vornehmlich aus Oxyethylen-, Oxypropylen- und Oxybutyleneinheiten, zusammengesetzt sein. Dabei können das Gewichtsverhältnis dieser Einheiten zueinander, ihre Sequenz sowie das Molgewicht des Polyoxyalkylenblockes variiert werden. Von Bedeutung ist auch die Endgruppe des Polyoxyalkylenblockes, die reaktiv (z. B. OH-Gruppe) oder inert (z. B. Alkoxy-Gruppe) sein kann. Der Polyoxyalkylenblock kann mit dem Polysiloxanblock durch eine hydrolytisch stabile C-Si-Bindung oder die hydrolytisch weniger stabile C-O-Si-Bindung verknüpft sein. Dabei können auch unterschiedliche Polyoxyalkylenblöcke an den Polysiloxanblock gebunden sein. Der Polysiloxanblock kann in Bezug auf Art und Anteil der Si-Einheiten variiert werden. Der Siloxanblock kann linear oder verzweigt sein und unterschiedliche Molekulargewichte aufweisen. Die Polyoxyalkylenblöcke können end- und/oder seitenständig an den Polysiloxanblock gebunden sein. Vorhersagen über Wirksamkeit eines Polysiloxan-Polyoxyalkylen-Blockmischpolymerisates als Entschäumer können nur in gewissem Maße gegeben werden. Der Fachmann ist deshalb genötigt, die Variationsmöglichkeit weitgehend empirisch zu erproben. In Anbetracht der großen, nahezu unübersehbaren Anzahl der Variationsmöglichkeiten stellt die Auffindung im Sinne der Herstellung von Entschäumern besonders wirksamer spezieller Strukturparameter und entsprechender Polyoxyalkylen-Polysiloxane eine fortschrittsraffende und somit erfinderische Leistung dar.

Polyoxyalkylen-Polysiloxane, welche in der Lacktechnologie Verwendung finden, sind bereits wiederholt beschrieben worden. Aus der großen Anzahl entsprechender Veröffentlichungen sollen stellvertretend die folgenden Schriften genannt werden.

So beschreibt die EP 0 427 263 eine Entschäumerzubereitung auf Siliconbasis, welche ein Polydiorganosiloxan, Kieselsäure und ein modifiziertes Silikonöl aufweist.

Auch die EP 0 785 240 B1 offenbart wässrige und strahlenhärtende Drucklacke und Druckfarben, die spezielle Polyoxyalkylen-Polysiloxan-Copolymerisate enthalten, die eine verbesserte Kratzfestigkeit, eine erhöhte Gleitfähigkeit sowie eine äußerst geringe Schaumneigung aufweisen, so dass die Druckfarbenherstellung problemloser verläuft und gleichzeitig ein optisch ansprechendes Druckbild erhalten werden kann.

Die EP 0 658 361 offenbart eine Entschäumeremulsion auf Basis organofunktionell modifizierter Polysiloxane, welche dadurch erhältlich ist, dass man ein oder mehrere, näher definierte organofunktionell modifizierte Siloxane und feinteilige Kieselsäure mischt und die Mischung mittels eines scherkraftarmen Rührers mit Wasser, welches ein hydrophiles organofunktionell modifiziertes Polysiloxan enthält, emulgiert.

Die Verwendung von organofunktionell modifizierten Polysiloxanen zur Entschäumung von Flüssigkeiten ist daher der Fachwelt bekannt. Es gibt eine Vielzahl von Veröffentlichungen und Patentschriften, in denen die Wirkungsweise der Siloxane beschrieben ist und Hinweise für die Auswahl der geeigneten Siloxane und ihrer Zubereitungsformen gegeben werden. Schon frühzeitig hat man erkannt, dass die Verwendung von Mischungen unterschiedlicher Polysiloxane von Vorteil sein kann. Hierzu wurde auch eine große Anzahl unterschiedlich organofunktionell modifizierter Polysiloxane entwickelt.

Ein wesentliches Merkmal aller Entschäumer ist ihre gezielte und kontrollierte Unverträglichkeit mit dem zu entschäumenden Medium. Ein zu verträglicher Entschäumer wandert nicht gezielt in die Schaumlamelle, um diese zu destabilisieren, sondern ist im gesamten Lackfilm vorliegend; die entschäumende Wirkung ist dann nur gering oder gar nicht vorhanden. Bei zu großer Unverträglichkeit machen sich Lackfilmdefekte wie Trübungen oder Krater störend bemerkbar. Die Auswahl des richtigen Entschäumers ist also eine Art "Balanceakt" zwischen Verträglichkeit und Unverträglichkeit. Dies bedeutet, dass man entweder ein wenig auf die Entschäumerwirkung verzichtet, damit der Entschäumer mit dem Lacksystem verträglicher ist oder man nimmt Lackfilmdefekte in Kauf, um beispielsweise bei der Produktion keine Wartezeiten zu haben. Dieser Kompromiss scheint unabdingbar zu sein.

Es ist daher Aufgabe der Erfindung, eine Entschäumerzusammensetzung bereitzustellen, die diese Gesetzmäßigkeit von Effektivität und Kompatibilität aufhebt.

Zur Lösung der Aufgabe wird daher eine Entschäumerzusammensetzung auf Basis von organofunktionell modifizierten Polysiloxanen enthaltend
- ein oder mehrere seitenständig mit Polyether modifiziertem Polysiloxan als Komponente A
   und
- mindestens ein endständig mit Polyether modifiziertem Polysiloxan als Komponente B
   vorgeschlagen.

Im Sinne dieser Erfindung werden Medium, Lacksystem, Lack- oder Farbformulierung, Lackrezeptur, Beschichtungszusammensetzung als Synonyme verstanden. Es sind Systeme, die zu entschäumen sind.

Polyether modifizierten Polysiloxanen und Polyetherpolysiloxan sind als Synonyme zu verstehen.

Erstaunlicherweise wurde festgestellt, dass die Kombinationen von bestimmten topologisch unterschiedlichen Polyether modifizierten Polysiloxanen zu synergetisch verbesserten Eigenschaften bezüglich Entschäumung und Verträglichkeit in zu entschäumenden Medien führen. Diese Synergie-Effekte waren überraschend.

Dem Fachmann ist bekannt, dass durch eine Kombination beispielsweise von einem ersten Polyetherpolysiloxan mit hoher Verträglichkeit und geringer Entschäumerwirkung mit einem zweiten Polyetherpolysiloxan mit geringer Verträglichkeit und hoher Entschäumerwirkung zu einer Zusammensetzung führt, deren Verträglichkeit geringer ist als die des ersten Polyetherpolysiloxans und deren Entschäumerwirkung geringer ist als die des zweiten Polyetherpolysiloxans.

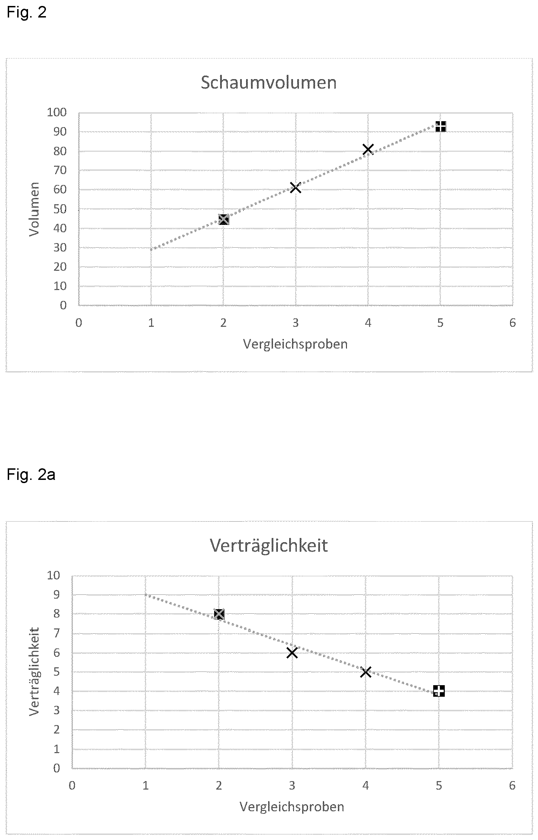

Untersuchungen haben gezeigt, dass diese Reduzierung einer Gesetzmäßigkeit zugrunde liegt. Vergleichsbeispiel 2 mit Fig. 2 und 2a zeigen diese Gesetzmäßigkeit auf. Demnach liegen die Werte für die Verträglichkeit und die Entschäumerwirkung der Mischung zwischen den jeweiligen Werten der einzelnen Polyetherpolysiloxanen. Sie liegen nahezu auf einer Gerade.

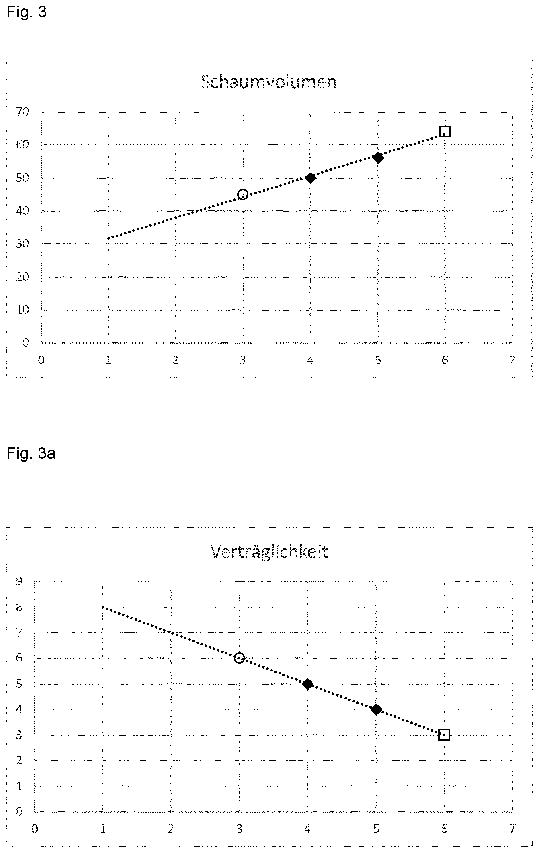

Auch Vergleichsbeispiel 3 mit Fig. 3 und 3a zeigen diesen linearen Zusammenhang (gestrichelte Linie) auf. Hierbei wurde als verträgliche Komponente ein Polyether eingesetzt.

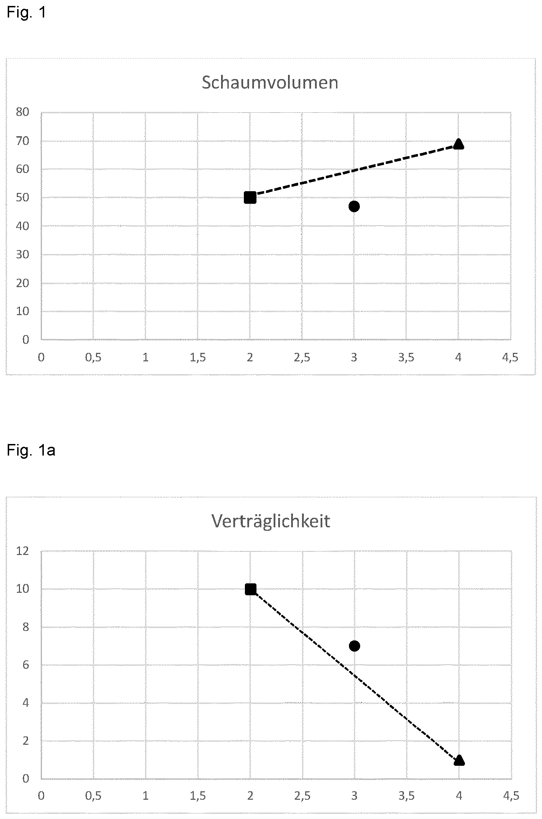

Die erfindungsgemäße Entschäumerzusammensetzung mit den gezielt gewählten topologischen Polyether modifizierten Polysiloxanen zeigt in Fig. 1 und 1a Synergieeffekte, die außerhalb dieser Gesetzmäßigkeit liegen. Die Werte liegen außerhalb der gestrichelten Linie, die ein Fachmann hätte erwarten müssen. Darüber hinaus zeigt die erfindungsgemäße Entschäumerzusammensetzung eine bessere Entschäumerwirkung als die Einzelkomponente.

Der Begriff "Entschäumung" wird häufig verwendet, um die Entfernung von Gasblasen aus dem Lack zu beschreiben. In bestimmten Fällen sollte jedoch zwischen "Entschäumung" und "Entlüftung" unterschieden werden. Zuerst müssen die Gasblasen an die Oberfläche gelangen. Die dann an der Oberfläche stattfindende Beseitigung der Schaumblasen wird als Entschäumung bezeichnet. Entschäumer sind nur an der Oberfläche wirksam, wo sie die dort befindlichen Luftblasen beseitigen. Entlüfter müssen dagegen im gesamten Lackfilm ihre Wirkung entfalten. Schaum auf der Oberfläche. Entschäumer destabilisieren die Schaumblasen. Lufteinschluss im Lackfilm. Entlüfter beschleunigen die Migration der Blasen zur Oberfläche.

Die erfindungsgemäße Entschäumerzusammensetzung ist zur Entschäumung und Entlüftung geeignet. Im Weiteren wird der Begriff "Entschäuner" für beide Effekte verwendet, obwohl in bestimmten Fällen der Terminus "Entlüfter" eigentlich korrekter wäre.

Vorzugsweise handelt es sich bei den organofunktionell modifizierten Polysiloxanen um lineare organofunktionell modifizierte Polysiloxane.

Bevorzugt handelt es sich bei Komponente A um eine Verbindung der allgemeinen Formel (I) 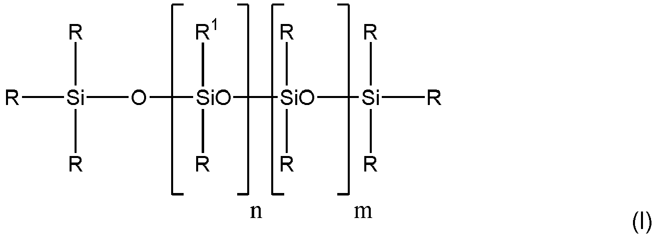 mit
R = gleiche und/oder verschiedene Alkylreste mit 1 bis 8 C-Atom, bevorzugt mit 1 - 4 C-Atom, besonders bevorzugt mit 1 oder 2 C-Atom,
R¹ = ―CₚH₂ₚO[(C₂H₄O)ₓ(C₃H₆O)_{y]}R², wobei p = 2, 3 oder 4 ist, R² = ein Wasserstoff und/oder Alkylrest mit 1 bis 3 C-Atom,
m = 10 - 400, bevorzugt 20 - 300, besonders bevorzugt 30 - 200
n = 1 bis 15, bevorzugt 2 bis 8,
wobei x und y so gewählt sind, dass das Molgewicht des Polyoxyalkylenblocks ―CₚH₂ₚO[(C₂H₄O)ₓ(C₃H₆O)_{y}]- im Bereich von 500 - 10.000 g/mol, bevorzugt 1000 ― 8000 g/mol und besonders bevorzugt 2.000 g/mol ― 6.000 g/mol beträgt.

Es ist bevorzugt vorstellbar, dass R² ein Wasserstoff oder eine Acetatgruppe sein kann.

Auch ist es vorzugsweise möglich, dass R¹ diesen Rest ―CₚH₂ₚO(C₃H₆O)_{y]}R² aufweist.

Vorzugsweise handelt es sich bei Komponente B um eine Verbindung gemäß der allgemeinen Formel (II) 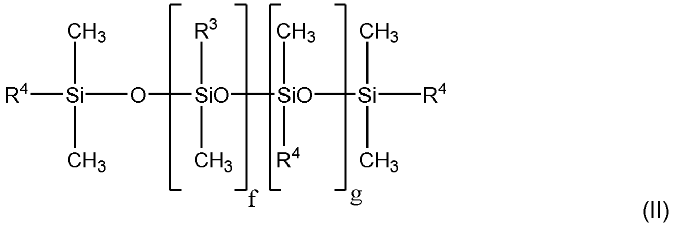 mit
R³ = gleiche und/oder verschiedene Alkylreste mit 1 bis 8 C-Atom, bevorzugt mit 1 ― 4 C-Atom, besonders bevorzugt mit 1 oder 2 C-Atom,
R⁴ = R³ und/oder ―CₚH₂ₚO[(C₂H₄O)ₓ(C₃H₆O)_{y]}R² und/oder ―CₚH₂ₚO(C₃H₆O)_{y}]R², wobei p = 2, 3 oder 4 ist, mit der Maßgabe dass mindestens ein R⁴ = ―CₚH₂ₚO[(C₂H₄O)ₓ(C₃H₆O)_{y}]- oder ―CₚH₂ₚO(C₃H₆O)_{y}]- endständig ist,
R² = Alkylrest mit 1 bis 3 C-Atom und/oder ein Wasserstoff, bevorzugt ein Alkylrest mit 1 bis 3 C-Atom,
f = 20 - 500, bevorzugt 25 - 200, besonders bevorzugt 35 - 100, g = 1 bis 15, bevorzugt 2 bis 8,
wobei x und y so gewählt sind, dass das Molgewicht des Polyoxyalkylenblocks ―CₚH₂ₚO[(C₂H₄O)ₓ(C₃H₆O)_{y}]- und/oder ―CₚH₂ₚO(C₃H₆O)_{y}]- im Bereich von 200 g/mol ― 4.000 g/mol, bevorzugt 500 ― 3.000 g/mol und besonders bevorzugt 750 ― 2.000 g/mol beträgt.

Vorzugsweise mit der Maßgabe, dass y > x im Polyoxyalkylenblock ― CₚH₂ₚO[(C₂H₄O)ₓ(C₃H₆O)_{y}]- ist, wobei x und y natürliche Zahlen sind.

Für den Fachmann ist es offensichtlich, dass die erhaltenen Verbindungen nach Formel (I) und Formel (II) in Form eines Gemisches vorliegen, dessen Verteilung im Wesentlichen durch statistische Gesetze bestimmt wird. Die Werte für x, y, f, g, p sowie n, m entsprechen daher Mittelwerten.

Von wesentlicher Bedeutung für die Eigenschaften der Polyoxyalkylen-Polysiloxane sind die Zahlenwerte der Indizes n und m bzw. f und g. n bzw. f gibt die Anzahl der Methylalkylsiloxyeinheiten an und bestimmt die Kettenlänge des Siloxananteils. Es ist dem Fachmann geläufig, dass die Verbindungen in Form eines Gemisches mit einer im Wesentlichen durch statistische Gesetze geregelten Verteilung vorliegen. Der Wert von n bzw. f stellt deshalb den Mittelwert der Anzahl der Methylalkylsiloxy-Einheiten dar.

Die erfindungsgemäß verwendeten Polysiloxane werden im Allgemeinen hergestellt durch eine metall, bevorzugt platinkatalysierte Additionsreaktion eines Polysiloxans enthaltend Silanwasserstoffatom /-en mit einem linearen Polyoxyalkylenoxidpolyether, dessen lineare Kette an einem Ende mit einer Alkylenoxygruppe (wie Allyloxy- oder Vinyloxy-) funktionalisiert ist und an einem anderen Ende beispielsweise OH funktionelle ist oder mit einer Alkoxy-, Aralkyloxy- oder Acyloxygruppe verschlossen ist wie nach folgender Gleichung:

XSiH + H₂C=CHCH₂OR³ → XSiCH₂CH₂CH₂OR³ (Hydrosilylierungsreaktion)

Die erfindungsgemäßen Polysiloxane sind grundsätzlich bekannt. Weitere Herstellungsverfahren sind aus der EP 0 785 240 B1 offenbart.

Erfindungsgemäß bestehen die Polyoxyalkylenblöcke vorzugsweise aus Oxyethylen- und Oxypropyleneinheiten, vorzugsweise ausgehend von Ethylenoxiden und Propylenoxiden.

Vorstellbar können die Polyoxyalkylenblöcke aus Oxyphenylethylenl- oder Oxybutyleneinheiten bestehen.

Bevorzugt ist der Polyoxyalkylenblock ―CₚH₂ₚO[(C₂H₄O)ₓ(C₃H₆O)_{y}]- in Komponente A blockweise aufgebaut.

Besonders bevorzugt besteht der Polyoxyalkylenblock in Komponente A aus drei Blöcken, der mittlere Block aus reinen Oxypropyleneinheiten und die übrigen Blöcke aus Oxyethylen- und Oxypropylen Gemischen.

Vorzugsweise weist R⁴ = ―CₚH₂ₚO[(C₂H₄O)ₓ(C₃H₆O)_{y}]R² und/oder ―CₚH₂ₚO(C₃H₆O)_{y}]R² auf, wobei p = 2, 3 oder 4 ist, mit der Maßgabe dass mindestens ein R⁴ = ― CₚH₂ₚO[(C₂H₄O)ₓ(C₃H₆O)_{y}]- oder ―CₚH₂ₚO(C₃H₆O)_{y}]- endständig ist.

Vorzugsweise weist Komponente B seitenständig und endständige modifizierte Polyoxyalkylen-Polysiloxane auf.

Die mit x und y bezeichneten Einheiten für Komponente B können wahlweise statistisch gemischt oder auch blockweise in der Kette enthalten sein. Statistische Verteilungen können blockweise aufgebaut sein mit einer beliebigen Anzahl an Blöcken und einer beliebigen Sequenz oder einer randomisierten Verteilung unterliegen, sie können auch alternierend aufgebaut sein oder auch über die Kette einen Gradienten bilden, insbesondere können sie auch alle Mischformen bilden, bei denen gegebenenfalls Gruppen unterschiedlicher Verteilungen aufeinander folgen können. Spezielle Ausführungen können dazu führen, dass die statistischen Verteilungen durch die Ausführung Beschränkungen erfahren. Für alle Bereiche, die nicht von der Beschränkung betroffen sind, ändert sich die statistische Verteilung nicht.

Vorzugsweise ist das Molverhältnis von Siloxananteil zu Polyoxyalkylenanteil von Komponente A kleiner als das Molverhältnis von Siloxananteil zu Polyoxyalkylenanteil von Komponente B.

Der Siloxananteil im Sinne dieser Erfindung ist durch die Formel (I) ohne R¹ bzw. Formel (II) ohne R⁴ definiert

Besonders bevorzugt weist Komponente A ein Molverhältnis von Siloxananteil zu Polyoxyalkylenanteil von 0,15 bis 0,35 auf.

Vorzugsweise weist Komponente A eine Viskosität im Bereich von 2.500 - 60.000 mPas, bevorzugt von 3.000 bis 55.000 mPas und besonders bevorzugt von 4.000 bis 50.000 mPas, gemessen nach DIN 53015 auf.

Besonders bevorzugt weist Komponente B ein Molverhältnis von Siloxananteil zu Polyoxyalkylenanteil von 0,4 bis 2 auf.

Vorzugsweise weist Komponente B eine Viskosität im Bereich von 250 - 1.200 mPas, bevorzugt von 300 bis 1.000 mPas und besonders bevorzugt von 350 bis 900 mPas, gemessen nach DIN 53015 auf.

Vorzugsweise weist Komponente A eine höhere Verträglichkeit, gemessen nach einer Methode wie unten beschrieben, als Komponente B auf.

Vorzugsweise weist Komponente B eine höhere Entschäumerwirkung, gemessen nach einer Methode wie unten beschrieben, als Komponente A auf.

Bevorzugt erhält man die erfindungsgemäße Zusammensetzung durch Einrühren der Komponenten A und B, bevorzugt mittels eines scherkraftarmen Rührers.

Es ist möglich, weitere Additive in die erfindungsgemäße Zusammensetzung hinzuzufügen, wie etwa Polyether, Öle natürlichen und synthetischen Ursprungs, organische Polymere, organomodifizierte Silikonpolymere und Feststoffe. Beispiel eines solchen geeigneten feinteiligen Feststoffes ist hochdisperse, pyrolytisch oder nasschemisch gewonnene Kieselsäure, die als Aerosil oder Sipernat im Handel erhältlich ist und durch Behandlung mit Organosiliciumverbindungen hydrophobiert sein kann. Weitere geeignete Feststoffe sind Metallseifen wie Magnesium-, Aluminium- und Calciumseifen sowie Polyethylen- und Amidwachse oder Harnstoffe.

Vorzugsweise besteht die Zusammensetzung aus
(a) 20 bis 80 Gew.-%, bevorzugt 30 -70 Gew.-%, besonders bevorzugt 40 - 60 Gew.-%, organofunktionell modifizierte Polysiloxane der Formel (I) als Komponente A,
(b) 20 bis 80 Gew.-%, bevorzugt 30 - 70 Gew.-%, besonders bevorzugt 40 - 60 Gew.-% organofunktionell modifizierte Polysiloxane der Formel (II) mit der Maßgabe, dass mindestens ein Polyoxyalkylenblock ― CₚH₂ₚO[(C₂H₄O)ₓ(C₃H₆O)_{y}]- endständig ist als Komponente B und
(c) 0 bis 70 Gew.-%, bevorzugt 0 ― 60 Gew.-%, besonders bevorzugt 0 -50 Gew.-% organofunktionell modifizierte Polysiloxane der Formel (II) mit der Maßgabe, dass mindestens ein Polyoxyalkylenblock ―CₚH₂ₚO(C₃H₆O)_{y}]- endständig ist als Komponente B'.
   wobei sich die Mengenangaben der Komponenten A, B und B' auf 100 Gew.-% ergänzen und sich auf die Zusammensetzung beziehen.

Bevorzugt ist die erfindungsgemäße Zusammensetzung erhältlich durch Einrühren von Komponente A in eine Mischung der Komponenten B und B', bevorzugt mittels eines scherkraftarmen Rührers.

Es ist ebenso vorstellbar, dass weitere Feststoffe, wie z. B. Kieselsäure, Wachse und Feststoffe hinzugefügt werden können, um die entschäumende Wirkung noch zu erhöhen. Dem Fachmann sind derartige Additive bekannt.

Vorzugsweise besteht die Zusammensetzung aus
(a) 20 bis 80 Gew.-%, bevorzugt 30 -70 Gew.-%, besonders bevorzugt 40 - 60 Gew.-%, organofunktionell modifizierte Polysiloxane der Formel (I) als Komponente A,
(b) 20 bis 80 Gew.-%, bevorzugt 30 ― 70 Gew.-%, besonders bevorzugt 40 - 60 Gew.-% organofunktionell modifizierte Polysiloxane der Formel (II) mit der Maßgabe, dass mindestens ein Polyoxyalkylenblock ― CₚH₂ₚO[(C₂H₄O)ₓ(C₃H₆O)_{y}]- endständig ist als Komponente B und
(c) 0 bis 70 Gew.-%, bevorzugt 0 ― 60 Gew.-%, besonders bevorzugt 0 -50 Gew.-% organofunktionell modifizierte Polysiloxane der Formel (II) mit der Maßgabe, dass mindestens ein Polyoxyalkylenblock ―CₚH₂ₚO(C₃H₆O)_{y}]- endständig ist als Komponente B'.
(d) > 0 bis 5 Gew.-%, bevorzugt 0,1 - 4,5 Gew.-%, besonders bevorzugt 0,5 - 3,5 Gew.-% eines Feststoffes, ausgewählt aus Kieselsäure, Harnstoff oder Wachse,
   wobei sich die Mengenangaben der Komponenten A, B, B' und Feststoffe auf 100 Gew.-% ergänzen und sich auf die Zusammensetzung beziehen.

Auch der Zusatz von Emulgatoren zur Herstellung einer Entschäumeremulsion ausgehend von der erfindungsgemäßen Zusammensetzung ist möglich. Hierbei können handelsübliche Emulgatoren eingesetzt werden, bevorzugt nicht ionische Emulgatoren ausgewählt aus Fettalkoholethoxylate.

Vorzugsweise weist die Zusammensetzung eine Viskosität von 250 bis 5000 mPas, bevorzugt 300 bis 50.000, besonders bevorzugt von 350 bis 40.000, gemessen nach DIN 53015 auf.

Vorzugsweise weist die Zusammensetzung eine statische Oberflächenspannung von 20 bis 65 mN/m, bevorzugt 25 bis 60 nN/m, besonders bevorzugt 30 bis 50 mN/m, gemessen mit einem K100 Messgerät für statische Oberflächen Spannung, Firma Krüss in Anlehnung an DIN EN 14370:2004, und eine dynamische Oberflächen Spannung von 20 bis 65 mN/m, bevorzugt 25 bis 60 nN/m, besonders bevorzugt 30 bis 50 mN/m, gemessen mit einem BP 50 Blasendrucktensiometer der Firma Küss in Anlehnung an DIN EN 14370:2004.

Die erfindungsgemäße Zusammensetzung weist bevorzugt in einem GPC-Spektrum mindestens eine bimodale Verteilung der Polyether auf.

Bevorzugt weist die erfindungsgemäße Zusammensetzung ein Gewichtsverhältnis von Komponente A zu Komponente B von 9:1 bis 1:9, bevorzugt von 4:1 bis 1:4 und besonders bevorzugt bei 2:1 bis 1:2.

Ein zusätzlicher Aspekt der Erfindung ist die Verwendung der Zusammensetzung als Entschäumeradditiv, als Verlaufadditiv und/oder als Substratnetzadditiv

Ein weiterer Aspekt der Erfindung ist die Verwendung der Zusammensetzung zur Herstellung von Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen.

Bei den Beschichtungszusammensetzungen können es sich um lösemittelhaltige, lösungsmittelfreie oder wasserbasierte Lacke oder Druckfarbe handelt.

Ein weiterer Gegenstand der Erfindung ist die Verwendung der Verbindungen nach Formel (I) und Formel (II) zur Herstellung einer Entschäumerzusammensetzung.

Hinsichtlich der gezielten Auswahlbedingungen der Polyether modifizierten Polysiloxane werden auf die o.g. Ausführung verwiesen.

Die folgenden Beispiele dienen dem Fachmann allein zur Erläuterung dieser Erfindung und stellen keinerlei Beschränkung des beanspruchten Gegenstands oder des beanspruchten Verfahrens dar.

### Messmethoden:

Zur Bestimmung von Parametern oder Messwerten werden vorzugsweise die nachfolgend beschriebenen Methoden verwendet. Insbesondere wurden diese Methoden in den Beispielen des vorliegenden Schutzrechts verwendet.

### Viskosität (mPas)

Die Viskosität wird nach DIN 53015 mit einem Kugelfallviskosimeter nach Höppler gemessen.

### Verträglichkeit

Die Verträglichkeit wird visuell an Hand eines Aufzuges der zu testenden Formulierung (appliziert mittels eines Spiralrakels (K-Stab Nummer 2 der Firma Erichsen) auf eine Folie (Melinex 401 CW, Firma Pütz Folien) ermittelt.

Die Beurteilung erfolgt nach folgender Skala (Bezogen auf eine Fläche von 10 x 10 cm):

| | | |
|---|---|---|
| 1 | = | Oberfläche komplett mit Defekten |
| 2 | = | Oberfläche fast komplett mit Defekten |
| 3 | = | Oberfläche mit sehr vielen Defekten |
| 4 | = | Oberfläche zahlreichen Defekten |
| 5 | = | Oberfläche mit Einzeldefekten (bis 50) |
| 6 | = | Oberfläche mit Einzeldefekten (bis 30) |
| 7 | = | Oberfläche mit wenigen Einzeldefekten (bis 20) |
| 8 | = | Oberfläche mit wenigen Einzeldefekten (bis 10) |
| 9 | = | Oberfläche mit sehr wenigen Einzeldefekten (1 bis 5) |
| 10 | = | Oberfläche frei von Defekten |

### Entschäumerwirkung

Die Entschäumerwirkung wird mittels eines Rührtests ermittelt. Dafür werden 50g der Formulierung und die Testmenge des Entschäumers (z.B. 0,2 g) in einen Kunststoffbecher gewogen. Der Entschäumer wird mittels eines Rührers (Dispermat Typ 60/2-457 der Firma VMA Getzmann GmbH) mit einer gezahnten Dissolverscheibe (Durchmesser 3cm, der Firma VMA Getzmann GmbH) für eine Minute bei 1000 Umdrehungen pro Minute eingearbeitet. Anschließend wird die Formulierung für 2 Minuten bei 3000 Umdrehungen pro Minute aufgeschäumt. Dann werden 45g der Formulierung in einen 100ml graduierten Glasmeßzylinder eingewogen und das Volumen abgelesen. Dabei bedeutet ein höheres Volumen eine schlechter Entschäumerwirkung.

### Applikation

Die jeweiligen Beschichtungszusammensetzungen werden mit einem Spiralrakel (K-Stab Nummer 2 der Firma Erichsen) auf eine Folie (Melinex 401 CW, Firma Pütz Folien)) appliziert. Die Trocknung erfolgt bei Raumtemperatur.

### Weitere Bedingungen

Werden im Rahmen der vorliegenden Erfindung %-Angaben gemacht, so handelt es sich, wenn nicht anderes angegeben, um Angaben in Gewichts-%. Bei Zusammensetzungen beziehen sich die %-Angaben, wenn nicht anderes angegeben, auf die Gesamtzusammensetzung. Werden nachfolgend Mittelwerte angegeben, so handelt es sich, wenn nicht anderes angegeben, um Zahlenmittel. Werden nachfolgend Messwerte angegeben, so wurden diese Messwerte, wenn nicht anderes angegeben, bei einem Druck von 101325 Pa, einer Temperatur von 23 °C und der umgebenden relativen Luftfeuchtigkeit von ca. 40 % ermittelt.

### Materialien und Geräte

Dispermat Typ 60/2-457, Firma VMA Getzmann GmbH
Dissolverscheibe (Durchmesser 3 cm), Firma VMA Getzmann GmbH)
Spiralrakels (K-Stab Nummer 2), Firma Erichsen
Folie (Melinex 401 CW), Firma Pütz Folien
K100 Messgerät für statische Oberflächen Spannung, Firma Krüss
BP 50 Messgerät für dynamische Oberflächen Spannung, Firma Krüss
Speedmixer DAC 150 FVZ, Firma Hauschild GmbH & Co. KG

### Vergleichsbeispiele

Tego Foamex 810 der Fa. Evonik ist ein Polyetherpolysiloxan, wobei die Polyethereinheiten und die Polysiloxaneinheiten in alternierenden Blöcken aufgebaut sind.

Tego Foamex 830 der Fa. Evonik ist ein Polyether.

Tego Foamex 844 der Fa. Evonik ist ein Polyetherpolysiloxan mit endständigen und seitenständigen Polyether-Modifizierungen, wobei die Polyethereinheiten von Ethylenoxiden oder Propylenoxiden ausgehen. Die Polyether-Modifizierung besteht demnach aus mindestens zwei Polyoxyalkylenblöcke, die jeweils nur aus Oxyethylen- oder Oxypropyleneinheiten bestehen.

Tego Wet 285 der Fa. Evonik ist ein seitenständig-modifiziertes Polyetherpolysiloxan, wobei der Polyoxyalkylenblock ein ―CₚHₚ₊₂O₂[(C₂H₄O)ₓ(C₃H₆O)_{y}]- ist mit p = 10.

### Ausführungsbeispiele

### 1. Herstellung der erfindungsgemäßen Entschäumerzusammensetzung

### 1.1 Herstellung von Komponente A

300 g eines Siloxans der allgemeinen Formel Me₃SiO(SiMeHO)_{6,5}(SiMe₂O)₉₀SiMe₃ und 1745 g eines Allylpolyether der allgemeinen Formel CH₂=CHCH₂O[(C₂H₄O)₁₃(C₃H₆O)₇₂]-H wurden in einen 4 L-Dreihalskolben mir Rückflußkühler und KPG-Rührer vorgelegt. Die Mischung wurde gerührt und auf 90 °C erhitzt. Es wurde eine trübe Emulsion erhalten. Anschließend wurden 0,7 g eine Lösung des Karstedt-Katalysators in Decamethylcyclopentasiloxan der Mischung zugesetzt (w (Pt) = 1.5 %). Eine exotherme Reaktion setzte ein und nach ca. 40 min klarte das Reaktionsgemisch deutlich auf. Anschließend wurde das Reaktionsgemisch 4 h lang bei 90 °C gerührt. Es wurde ein trübes, flüssiges Produkt erhalten.

### 1.2 Herstellung von Komponente B

200 g eines Siloxans der allgemeinen Formel HSiMe₂O(SiMeHO)_{2,7}(SiMe₂O)_{39,3}SiMe₂H und 468 g eines Allylpolyether der allgemeinen Formel CH₂=CHCH₂O[(C₂H₄O)₂(C₃H₆O)₁₈]-Me wurden in einen 1 L-Dreihalskolben mir Rückflußkühler und KPG-Rührer vorgelegt. Die Mischung wurde gerührt und auf 90 °C erhitzt. Es wird eine trübe Emulsion erhalten. Anschließend wurden 0,25 g eine Lösung des Karstedt-Katalysators in Decamethylcyclopentasiloxan der Mischung zugesetzt (w (Pt) = 1.5 %). Eine exotherme Reaktion setzte ein und nach ca. 30 min klarte das Reaktionsgemisch deutlich auf. Anschließend wurde das Reaktionsgemisch 4 h lang bei 90 °C gerührt. Es wurde ein klares, flüssiges Produkt erhalten.

### 1.3 Herstellungsverfahren

Je 25 g von Komponente A und von Komponente B werden in ein 100 ml Kunststoffbehälter gewogen. Der Kunststoffbecher wird mittels Schraubdeckel verschlossen und in einen Speedmixer bei einer Umdrehungszahl von 2000 bis 4000 Upm für zwei bis sechs Minuten gemischt. Die erfindungsgemäße Zusammensetzung wird nun zur weiteren Testung eingesetzt.

### 2. Überprüfung der Verträglichkeit und Entschäumerwirkung

### 2.1 Herstellung eines Lacks

Für die Prüfung der Verträglichkeit und Entschäumerwirkung wurde zunächst ein Lack gemäß Tabelle 1 hergestellt.

Zunächst wurde für eine Festharzlösung angesetzt. Hierzu wurden in einem für einen 3 kg Ansatz zunächst die in Tabelle 1 angegebene, umgerechnete Menge an Wasser in einem 5 Liter Edelstahlbehälter vorgelegt und unter Rühren auf einer Heizplatte auf 70 °C erhitzt. Sodann werden portionsweise die in Tabelle 1 angegebene, umgerechnete Menge der übrigen Bestandteile zugegeben. Man rührt bis sich das Festharz komplett gelöst hat. Der pH Wert wird mittels Amin auf einen Wert zwischen 8 und 9 eingestellt.

Zur Herstellung des Lacks mit einem 1 kg Ansatz werden zunächst 400g der Festharzlösung, 400g Polymerdispersion und 130g Wasser in einem 2 Liter Edelstahlbehälter unter Rühren gemischt. Nun werden nacheinander die Wachsdispersion, das Filmbildehilfsmittel und der Verzögerer unter Rühren hinzugegeben. Schließlich wird das Rheologie Additiv unter Rühren hinzugegeben und das ganze bei mittlerer Scherkraft für 20 Minuten gerührt. Der Lack wird zur weiteren Prüfung eingesetzt.

### 2.2 Verträglichkeitsprüfung

50g des Lacks und 0,3 g des entsprechenden Entschäumers (erfindungsgemäßes Beispiel aus 1 und Vergleichsbeispiele) in einen Kunststoffbecher gewogen und mittels eines Rührers (Dispermat Typ 60/2-457 der Firma VMA Getzmann GmbH) mit einer gezahnten Dissolverscheibe (Durchmesser 3cm, der Firma VMA Getzmann GmbH) für eine Minute bei 1000 Umdrehungen pro Minute eingearbeitet. Anschließend wird dieser Ansatz für 2 Minuten bei 3000 Umdrehungen pro Minute aufgeschäumt. Nach 24h Standzeit wurde 2ml des Ansatzes auf einer Folie wie oben beschrieben appliziert und visuell ausgewertet.

Die Ergebnisse sind den Tabellen 2 ― 3 aufgeführt.

### 2.3 Entschäumerwirkung

Wie oben beschrieben werden 50g des Lackes und 0,3 g des entsprechenden Entschäumers (erfindungsgemäßes Beispiel aus 1 und Vergleichsbeispiele) eingesetzt.

Die Ergebnisse sind den Tabellen 2 ― 4 aufgeführt.

**Tabelle 1**

| **Festharzlösung** | | | |
|---|---|---|---|
| **Produkt** | **Hersteller** | | **Gew.-%** |
| Joncryl 678 | BASF | Festharz | 32 |
| Ammoniak (25%) | | Amin | 8,9 |
| Water | | Lösemitte | 59,1 |
| | | | |
| Total | | | 100% |
| | | | |

| **Lack** | | | |
|---|---|---|---|
| **Produkt** | **Hersteller** | | **Gew.-%** |
| Festharzlösung | | | 40 |
| Joncryl 90 | BASF | Polymerdispersion | 40 |
| Ultratube D816 | Keim Additec | Wachsdispersion | 2 |
| Dowanol DPnB | Dow | Filmbilderhilfsmittel | 2 |
| PEG 400 | | Verzögerer | 1 |
| TEGO ViscoPlus 3030 | Evonik | Rheologie Additiv | 2 |
| Wasser | | Lösemitte | 13 |
| | | | |
| Total | | | 100 |

### 2.1 Ergebnisse der erfindungsgemäßen Zusammensetzung

**Tabelle 2**

| | **Schaumvolumen** | **Verträglichkeit** |
|---|---|---|
| | [mL/45g] | |
| Erfindungsgemäße Zusammensetzung aus Komponente A und Komponente B | 47 | 7 |
| Komponente A | 69 | 10 |
| Komponente B | 50 | 1 |

Die Ergebnisse wurden jeweils in einer Grafik überführt.
Fig. 1 beschreibt die Schaumvolumen der erfindungsgemäßen Zusammensetzung, gekennzeichnet als Kreis, der Komponente A gekennzeichnet mit einem Dreieck und der Komponente B mit einem Quadrat. Die gestrichelte Linie stellt das mutmaßliche, der Gesetzmäßigkeit folgend, zu erwartende Schaumvolumen dar. Je weniger Schaumvolumen messbar, desto besser ist die Entschäumerwirkung der Zusammensetzung.
Es zeigte sich, dass die erfindungsgemäße Zusammensetzung eine viel bessere Entschäumerwirkung aufweist als die der beiden Einzelkomponente. Sie liegt außerhalb der Gesetzmäßigkeit.

Fig. 1a beschreibt die Verträglichkeit der erfindungsgemäßen Zusammensetzung, gekennzeichnet als Kreis, der Komponente B gekennzeichnet mit einem Dreieck. Komponente A mit einem Quadrat. Auch hier liegt der Wert der erfindungsgemäßen Zusammensetzung außerhalb der Gesetzmäßigkeit (gestrichelte Linie).

### 2.2 Vergleichsbeispiel 2

**Tabelle 3**

| | **Schaumvolumen** | **Verträglichkeit** |
|---|---|---|
| | [mL/45g] | |
| TEGO Wet 285 | 93 | 8 |
| Tego Foamex 810 | 45 | 4 |
| TEGO Foamex 810 : TEGO Wet 285, 1:2 | 61 | 5 |
| TEGO Foamex 810 : TEGO Wet 285, 2:1 | 81 | 6 |

Die Ergebnisse wurden jeweils in einer Grafik überführt.
Fig. 2 beschreibt die Schaumvolumen der Mischung aus TEGO Foamex 810 und TEGO Wet 285 mit zwei unterschiedlichen Verhältnissen, gekennzeichnet als Kreuz, des Tego Wet 285 gekennzeichnet mit einem X im schwarzen Quadrat und des TEGO Foamex 810 mit einem Kreuz im schwarzen Quadrat. Die gestrichelte Linie zeigte die Gesetzmäßigkeit.

Es wurde festgestellt, dass die Mischung herkömmlicher Entschäumer ein Schaumvolumen zwischen den beiden Werten der Einzelkomponente liegt. Sie liegen nahezu auf eine Gerade.

Fig. 2a beschreibt die Verträglichkeit der der Mischung aus TEGO Foamex 810 und TEGO Wet 285 in zwei unterschiedlichen Verhältnisse, gekennzeichnet als Kreuz, des Tego Foamex 810 gekennzeichnet mit einem X im schwarzen Quadrat und des TEGO Wet 285 mit einem Kreuz im schwarzen Quadrat. Die gestrichelte Linie zeigte die Gesetzmäßigkeit. Auch hier erfüllte die Mischung die Gesetzmäßigkeit (gestrichelte Linie).

### 2.3 Vergleichsbeispiel 3

**Tabelle 4:**

| | **Schaumvolumen** | **Verträglichkeit** |
|---|---|---|
| | [mL/45g] | |
| TEGO Foamex 830 | 64 | 6 |
| TEGO Foamex 844 | 45 | 3 |
| TEGO Foamex 830 : 844 1:2 | 50 | 4 |
| TEGO Foamex 830 : 844 2:1 | **56** | **5** |

Die Ergebnisse wurden jeweils in einer Grafik überführt.
Fig. 3 beschreibt die Schaumvolumen der Mischung aus TEGO Foamex 830 und TEGO Foamex 844 mit zwei unterschiedlichen Verhältnissen, gekennzeichnet als schwarze Rauten, des Tego Foamex 844 gekennzeichnet mit einem weißen Quadrat und des TEGO Foamex 830, gekennzeichnet mit einem weißen Kreis. Die gestrichelte Linie zeigte die Gesetzmäßigkeit.

Es konnte festgestellt werden, dass die Mischung herkömmlicher Entschäumer ein Schaumvolumen zwischen den beiden Werten der Einzelkomponente aufzeigte. Sie liegen nahezu auf eine Gerade.

Fig. 2a beschreibt die Verträglichkeit der Mischung aus TEGO Foamex 830 und TEGO Foamex 844 mit zwei unterschiedlichen Verhältnissen, gekennzeichnet als schwarze Rauten, des Tego Foamex 830 gekennzeichnet mit einem weißen Kreis und des TEGO Foamex 844 mit einem weißen Quadrat. Die gestrichelte Linie zeigte die Gesetzmäßigkeit. Auch hier erfüllte die Mischung die Gesetzmäßigkeit (gestrichelte Linie).

## Patentansprüche

1. Entschäumerzusammensetzung auf Basis von organofunktionell modifizierten Polysiloxanen enthaltend
- ein oder mehrere seitenständig mit Polyether modifiziertem Polysiloxan als Komponente A
und
- mindestens ein endständig mit Polyether modifiziertem Polysiloxan als Komponente B.

2. Zusammensetzung nach Anspruch 1, **dadurch gekennzeichnet, dass** es sich bei den organofunktionell modifizierten Polysiloxanen um lineare organofunktionell modifizierte Polysiloxane handelt.

3. Zusammensetzung nach einem der vorgenannten Ansprüche, **dadurch gekennzeichnet, dass** Komponente A gemäß der allgemeinen Formel (I) 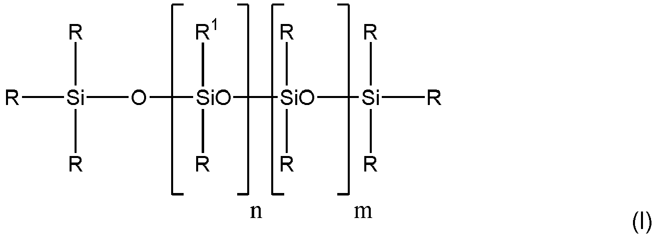 mit
R = gleiche und/oder verschiedene Alkylreste mit 1 bis 8 C-Atom, bevorzugt mit 1 - 4 C-Atom, besonders bevorzugt mit 1 oder 2 C-Atom,
R¹ = ―CₚH₂ₚO[(C₂H₄O)ₓ(C₃H₆O)_{y}]R², wobei p = 2, 3 oder 4 ist, R² = ein Wasserstoff und/oder Alkylrest mit 1 bis 3 C-Atom,
m = 10 - 400, bevorzugt 20 - 300, besonders bevorzugt 30 - 200
n = 1 bis 15, bevorzugt 2 bis 8,
wobei x und y so gewählt sind, dass das Molgewicht des Polyoxyalkylenblocks ―CₚH₂ₚO[(C₂H₄O)ₓ(C₃H₆O)_{y}]- im Bereich von 500 - 10.000 g/mol, bevorzugt 1000 ― 8000 g/mol und besonders bevorzugt 2.000 g/mol ― 6.000 g/mol beträgt.

4. Zusammensetzung nach einem der vorgenannten Ansprüche, **dadurch gekennzeichnet, dass** Komponente B gemäß der allgemeinen Formel (II) 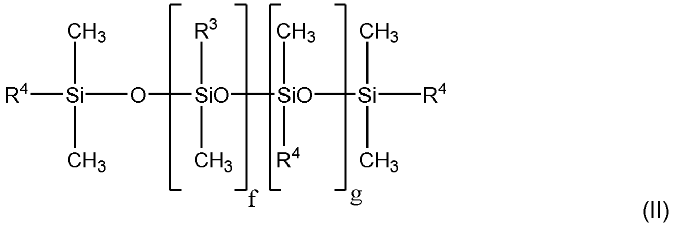 mit
R³ = gleiche und/oder verschiedene Alkylreste mit 1 bis 8 C-Atom, bevorzugt mit 1 ― 4 C-Atom, besonders bevorzugt mit 1 oder 2 C-Atom,
R⁴ = R³ und/oder ―CₚH₂ₚO[(C₂H₄O)ₓ(C₃H₆O)_{y}]R² und/oder ―CₚH₂ₚO(C₃H₆O)_{y}]R², wobei p = 2, 3 oder 4 ist, mit der Maßgabe dass mindestens ein R⁴ = ― CₚH₂ₚO[(C₂H₄O)ₓ(C₃H₆O)_{y}]- oder -CₚH₂ₚO(C₃H₆O)_{y}]- endständig ist,
R² = Alkylrest mit 1 bis 3 C-Atom und/oder ein Wasserstoff, bevorzugt ein Alkylrest mit 1 bis 3 C-Atom,
f = 20 - 500, bevorzugt 25 - 200, besonders bevorzugt 35- 100,
g = 1 bis 15, bevorzugt 2 bis 8,
wobei x und y so gewählt sind, dass das Molgewicht des Polyoxyalkylenblocks ―CₚH₂ₚO[(C₂H₄O)ₓ(C₃H₆O)_{y}]- und/oder ―CₚH₂ₚO(C₃H₆O)_{y}]- im Bereich von 200 g/mol ― 4.000 g/mol, bevorzugt 500 ― 3.000 g/mol und besonders bevorzugt 750 ― 2.000 g/mol beträgt.

5. Zusammensetzung nach einem der vorgenannten Ansprüche, **dadurch gekennzeichnet, dass** y > x im Polyoxyalkylenblock ―CₚH₂ₚO[(C₂H₄O)ₓ(C₃H₆O)_{y}]-ist, wobei x und y natürliche Zahlen sind.

6. Zusammensetzung nach einem der vorgenannten Ansprüche, **dadurch gekennzeichnet, dass** Polyoxyalkylenblocks ―CₚH₂ₚO[(C₂H₄O)ₓ(C₃H₆O)_{y}]- in Komponente A blockweise aufgebaut ist.

7. Zusammensetzung nach einem der vorgenannten Ansprüche, **dadurch gekennzeichnet, dass** R⁴ = ―CₚH₂ₚO[(C₂H₄O)ₓ(C₃H₆O)_{y}]R² und/oder ― CₚH₂ₚO(C₃H₆O)_{y}]R², wobei p = 2, 3 oder 4 ist, mit der Maßgabe dass mindestens ein R⁴ = ―CₚH₂ₚO[(C₂H₄O)ₓ(C₃H₆O)_{y}]- oder ―CₚH₂ₚO(C₃H₆O)_{y}]- endständig ist.

8. Zusammensetzung nach einem der vorgenannten Ansprüche, **dadurch gekennzeichnet, dass** das Molverhältnis von Siloxananteil zu Polyoxyalkylenanteil von Komponente A kleiner ist als das Molverhältnis von Siloxananteil zu Polyoxyalkylenanteil von Komponente B.

9. Zusammensetzung nach einem der vorgenannten Ansprüche, **dadurch gekennzeichnet, dass** Komponente A ein Molverhältnis von Siloxananteil zu Polyoxyalkylenanteil von 0,15 bis 0,35 aufweist.

10. Zusammensetzung nach einem der vorgenannten Ansprüche, **dadurch gekennzeichnet, dass** Komponente A eine Viskosität im Bereich von 2.500 - 60.000 mPas, bevorzugt von 3.000 bis 55.000 mPas und besonders bevorzugt von 4.000 bis 50.000 mPas, gemessen nach DIN 53015 aufweist.

11. Zusammensetzung nach einem der vorgenannten Ansprüche, **dadurch gekennzeichnet, dass** Komponente B ein Molverhältnis von Siloxananteil zu Polyoxyalkylenanteil von 0,4 bis 2 aufweist.

12. Zusammensetzung nach einem der vorgenannten Ansprüche, **dadurch gekennzeichnet, dass** Komponente B eine Viskosität im Bereich von 250 - 1.200 mPas, bevorzugt von 300 bis 1.000 mPas und besonders bevorzugt von 350 bis 900 mPas, gemessen nach DIN 53015 aufweist.

13. Zusammensetzung nach einem der vorgenannten Ansprüche, **dadurch gekennzeichnet, dass** Komponente A eine höhere Verträglichkeit, gemessen nach einer Methode beschrieben in der Beschreibung, aufweist als Komponente B.

14. Zusammensetzung nach einem der vorgenannten Ansprüche, **dadurch gekennzeichnet, dass** Komponente B eine höhere Entschäumerwirkung, gemessen nach einer Methode beschrieben in der Beschreibung, aufweist als Komponente A.

15. Zusammensetzung nach einem der vorgenannten Ansprüche erhältlich durch Einrühren der Komponenten A und B, bevorzugt mittels eines scherkraftarmen Rührers.

16. Zusammensetzung nach einem der vorgenannten Ansprüche bestehend aus
(a) 20 bis 80 Gew.-%, bevorzugt 30 -70 Gew.-%, besonders bevorzugt 40 - 60 Gew.-%, organofunktionell modifizierte Polysiloxane der Formel (I) als Komponente A,
(b) 20 bis 80 Gew.-%, bevorzugt 30 - 70 Gew.-%, besonders bevorzugt 40 - 60 Gew.-% organofunktionell modifizierte Polysiloxane der Formel (II) mit der Maßgabe, dass mindestens ein Polyoxyalkylenblock ― CₚH₂ₚO[(C₂H₄O)ₓ(C₃H₆O)_{y}]- endständig ist als Komponente B und
(c) 0 bis 70 Gew.-%, bevorzugt 0 ― 60 Gew.-%, besonders bevorzugt 0 -50 Gew.-% organofunktionell modifizierte Polysiloxane der Formel (II) mit der Maßgabe, dass mindestens ein Polyoxyalkylenblock ―CₚH₂ₚO(C₃H₆O)_{y}]- endständig ist als Komponente B'.
wobei sich die Mengenangaben der Komponenten A, B und B' auf 100 Gew.-% ergänzen und sich auf die Zusammensetzung beziehen.

17. Zusammensetzung nach Anspruch 10 erhältlich durch Einrühren von Komponente A in eine Mischung der Komponenten B und B', bevorzugt mittels eines scherkraftarmen Rührers.

18. Zusammensetzung nach einem der vorgenannten Ansprüche, **dadurch gekennzeichnet, dass** sie eine Viskosität von 250 bis 5000 mPas, bevorzugt 300 bis 50.000, besonders bevorzugt von 350 bis 40.000, gemessen nach DIN 53015, aufweist.

19. Zusammensetzung nach einem der vorgenannten Ansprüche, **dadurch gekennzeichnet, dass** sie eine statische Oberflächenspannung von 20 bis 65 mN/m, bevorzugt 25 bis 60 nN/m, besonders bevorzugt 30 bis 50 mN/m, gemessen mit einem K100 Messgerät für statische Oberflächen Spannung, Firma Krüss in Anlehnung an DIN EN 14370:2004, und eine dynamische Oberflächen Spannung von 20 bis 65 mN/m, bevorzugt 25 bis 60 nN/m, besonders bevorzugt 30 bis 50 mN/m, gemessen mit einem BP 50 Blasendrucktensiometer der Firma Küss in Anlehnung an DIN EN 14370:2004.

20. Verwendung der Zusammensetzung nach einem der vorgenannten Ansprüche als Entschäumeradditiv, als Verlaufadditiv und/oder als Substratnetzadditiv.

21. Verwendung der Zusammensetzung nach einem der vorgenannten Ansprüche zur Herstellung von Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen.

22. Verwendung von Komponente A gemäß der allgemeinen Formel (I) nach einem der vorgenannten Ansprüche 1 - 19 und von Komponente B gemäß der allgemeinen Formel (II) nach einem der vorgenannten Ansprüche 1 ― 19 zur Herstellung einer Entschäumerzusammensetzung.
